# DEMANDE DE BREVET EUROPEEN

(11) **EP 3 685 982 A1**
(43) Date de publication de la demande: **29.07.2020**
(21) Numéro de dépôt: 20153992.1
(22) Date de dépôt: 28.01.2020
(51) Int. Cl.: B29C 44/04, A45D 34/04, B29C 44/42

(54) **APPLICATION D'UN PRODUIT SUR UNE PARTIE SUPERFICIELLE DU CORPS HUMAIN**

(30) Priorité: 28.01.2019 FR 1900742
(71) Demandeur: Texen Services, 01460 Brion (FR)
(72) Inventeur: GAUTTIER, William, 01000 BOURG EN BRESSE (FR); ANCEAU, Ludovic, 35400 SAINT MALO (FR)
(74) Mandataire: Ernest Gutmann - Yves Plasseraud S.A.S.

(57) **Abrégé**

Procédé de fabrication d'un applicateur (3) comprenant une partie de chargement/application (4), avec la succession d'étapes a/ on dispose d'un moule, b/ on dispose de matière thermoplastique élastomère (M) de dureté avant injection comprise entre 5 Shore A et 70 Shore A, et de gaz (G) inerte apte à un processus de moussage physique, c/ on réalise leur mélange, d/ on procède à une injection-moulage du mélange dans le moule, e/ une fois la matière thermoplastique élastomère refroidie et son moussage physique réalisé, on extrait la partie de chargement/application (4) qui présente une structure intérieure (11) à cellules fermées (11a) et une structure superficielle microporeuse (12), et avec l'absence d'une étape de dépôt sur la structure superficielle microporeuse (12) d'un matériau d'adhésion de floc ou de floc.

## Description

### Domaine technique de l'invention

L'invention concerne l'application d'un produit (dénommé conventionnellement produit à appliquer) sur une partie superficielle du corps humain, et a plus particulièrement pour objet (i) un procédé de fabrication d'un applicateur de produit à appliquer comprenant une partie de chargement et d'application de produit à appliquer (dénommée conventionnellement partie de chargement/application), (ii) un applicateur de produit à appliquer comprenant une partie de chargement/application, et (iii) un ensemble d'application comportant un tel applicateur.

Dans le contexte de l'invention, l'application de produit à appliquer sur une partie superficielle du corps humain est réalisée en appliquant sur le corps humain à l'emplacement souhaité, soit la partie de chargement/application chargée de produit à appliquer soit le produit à appliquer chargé sur la partie de chargement/application. Selon les cas, l'application de produit à appliquer est réalisée à la manière d'un tamponnage ou bien d'un déplacement par glissement sur la partie superficielle du corps humain considérée.

Dans le contexte de l'invention, le terme « appliquer » et le terme « application » doivent être compris comme signifiant poser, mettre sur, sans pression notable ou avec une pression très faible, de sorte à ne pas laisser une empreinte en creux sur la partie superficielle du corps humain considérée.

Dans le cas principal visé par l'invention, le produit à appliquer est un produit cosmétique, c'est-à-dire une substance ou un mélange sous forme liquide, pâteuse, émulsion, ou de poudre, destiné à être mis en contact avec une partie superficielle du corps humain en vue d'en modifier l'aspect, la nettoyer, la protéger, la maintenir en bon état, comme par exemple, un brillant ou un rouge à lèvres, du mascara, un fard, une poudre de maquillage, cette liste n'étant qu'exemplative.

Toutefois, l'invention vise également le cas où le produit à appliquer est un médicament, destiné à être mis en contact avec une partie superficielle du corps humain, de façon analogue à un produit cosmétique. Un tel médicament est une substance ou composition présentée comme possédant des propriétés curatives ou préventives à l'égard des maladies humaines, ou en vue d'établir un diagnostic médical ou de restaurer, corriger ou modifier des fonctions physiologiques en exerçant une action pharmacologique, immunologique ou métabolique. Par exemple, il peut s'agir d'un désinfectant ou d'un cicatrisant cutané, cette liste n'étant qu'exemplative.

### Etat de la technique antérieure

Les professionnels des applicateurs, au sens où cela a été défini, connaissent une grande variété de réalisations de tels applicateurs, lesquels comportent une partie dénommée conventionnellement partie de chargement/application, et, le plus souvent, une ou plusieurs autres parties de support et/ou de manipulation par l'utilisateur et/ou d'association rigide amovible par exemple avec un récipient de produit à appliquer et/ou d'obturation du récipient. Ainsi, selon plusieurs réalisations typiques, l'applicateur comporte une tige qui, d'un côté, est associée rigidement à la partie de chargement/application en la supportant et qui, du côté opposé, est associée rigidement à une partie en forme de capuchon servant à manipuler l'applicateur et à être montée de façon amovible sur le récipient de produit à appliquer en l'obturant. De tels applicateurs sont des objets fabriqués en série, d'une taille hors tout maximale de l'ordre de quelques centimètres pour la longueur et du centimètre pour le diamètre, d'un faible poids, de l'ordre de 10 grammes. La partie de chargement/application est quant à elle d'une taille hors tout maximale de l'ordre du centimètre pour la longueur et le diamètre, et d'un poids, de l'ordre de 1 gram.
La partie de chargement/application peut faire l'objet de différentes réalisations en fonction de l'usage. On peut ainsi distinguer les parties de chargement/application (qualifiées conventionnellement de « effilées ») caractérisées par le fait qu'elles comportent des parties fines allongées, comme des poils, des filaments, des dents des picots ou équivalents, outre d'éventuels flocs, et les parties de chargement/application (qualifiées conventionnellement de « ramassées ») caractérisées par le fait qu'elles ne comportent pas de telles parties fines allongées comme des poils, des filaments, des dents, mais se présentent sous une forme plus compacte et massive, comme une forme de boule, de cône, d'ovoïde, de bulbe, de tonneau, de diabolo, de pyramide, de palette ou spatule, de cuillère, le cas échéant avec une cavité débouchante ménagée entre des bras, ou analogue, etc., le cas échéant avec des flocs. Il est entendu que les qualificatifs « effilé » et « ramassé » doivent être compris comme exprimant le sens qui vient de leur être donné et que ces qualificatifs s'appliquent à l'applicateur de la même manière que pour sa partie de chargement/application.
Des parties de chargement/application effilées sont représentées dans les documents FR3014654, FR3066367, FR3059878, WO2018130371. Des parties de chargement/application ramassées sont représentées dans les documents US7134799, FR2745272, FR3036594, FR2518381, FR2994068, WO2016/174332, EP1920677, EP1639912, FR2872999 et WO2016/016133. Ces documents ne sont donnés qu'à titre exemplatif.
WO03029098 se rapporte à un applicateur comprenant un support ayant une paroi en forme de dôme aplati auquel est fixé un organe d'application présenté comme un élément fibreux, cellulaire ou alvéolaire ou poreux, comme une mousse à cellules ouvertes ou semi-ouvertes, un tissé, un non-tissé, un feutre pas davantage défini.
FR2751854 expose que «bien qu'une houppette éponge faite d'une matière alvéolaire à alvéoles fermés soit utilisée pour l'application de produits de beauté du type liquide et ait des caractéristiques telles qu'elle est imperméable à un excès de produits de beauté liquides, il y a encore beaucoup d'utilisatrices qui n'aiment pas l'utiliser. Comme la houppette éponge en matière alvéolaire à alvéoles fermés n'absorbe pas les produits de beauté, un jeu des produits de beauté a lieu entre la peau et la houppette éponge, de sorte que la houppette glisse sur la peau ou produit une sensation inattendue de rigidité à l'arrêt de l'application des produits de beauté sur la peau. C'est la raison pour laquelle la houppette éponge à alvéoles fermés est peu prisée des utilisatrices. » Aussi, FR2751854 propose une houppette comportant un substrat en polyuréthane alvéolaire à alvéoles fermées et, fixés sur une face de celui-ci par fusion, des particules en résine polyoléfinique ayant une grosseur de quelques microns à quelques centaines de microns.
FR2860960 se rapporte à un applicateur formé par un matériau comportant une pluralité d'alvéoles à cellules ouvertes, s'ouvrant sur la face d'application revêtue d'un flocage de fibres. FR3041510 se rapporte à un ensemble de conditionnement et d'application d'un produit cosmétique dont l'applicateur comprend un organe d'application en un matériau poreux à cellules ouvertes.
FR2895887 se rapporte à un applicateur dont le moyen d'application est monobloc, moulé, en matière plastique et comprend un ou plusieurs éléments de rétention du produit à appliquer en vue de son application. Ces éléments de rétention sont en creux et visibles à l'œil nu, ce qui autorise à les qualifier de « macro-éléments de rétention ».
EP1639912 et FR2868264 décrivent également de tels macro-éléments de rétention.
Il est usuel de fabriquer un applicateur ou une partie de chargement/application en matière plastique par le procédé classique d'injection-moulage (injection simple ou multiple). Il s'agit de fondre la matière plastique constitutive de l'applicateur ou de la partie de chargement/application et à l'injecter dans un moule à une vitesse et pression contrôlés par une presse. Après refroidissement et solidification, l'applicateur ou la partie de chargement/application est extraite du moule. Dans le cas d'une bi-injection, on met en oeuvre deux matières plastiques différentes, par exemple concernant leur dureté. On peut ainsi réaliser un applicateur comportant une âme interne plus rigide et une partie périphérique de chargement/application plus souple. Nombre de documents exposent l'injection moulage ou la bi-injection, parmi lesquels, à titre exemplatif, WO2009049853, WO2009151202, US8127777, EP2172127 et FR2962888. US2009/0045089 mentionne en outre, comme procédé, l'empilage de disques et la fabrication additive comme la stéréolithographie. US2013/0276812 mentionne pour sa part, en outre, l'impression 3D. EP1070468 mentionne l'injection, la compression, l'estampage, le décolletage. Avec le procédé classique d'injection-moulage, la matière de l'objet fabriqué est caractérisée par son continuum.
Il est également usuel de prévoir que la surface extérieure d'application d'une partie de chargement/application en matière plastique soit floquée, ce qui permet d'améliorer, d'une part, le chargement de la partie de chargement/application avec du produit à appliquer et, d'autre part, l'aptitude à l'étalement du produit à appliquer, et ce qui implique le dépôt sur cette surface d'une colle puis le dépôt sur la colle de flocs, comme des fibres, comme cela est exposé dans le document EP1426118 et ainsi que cela résulte de nombre de documents, parmi lesquels on peut citer à titre exemplatif EP1070468, EP2164360, EP3300625, WO2018007620, FR3035577, WO2016108357. La réalisation d'un flocage nécessite une étape de fabrication propre et l'emploi de colle, ce qui peut être perçu comme un inconvénient eu égard au contact de la partie de chargement/application avec une partie superficielle du corps humain ou eu égard aux exigences écologiques et environnementales.

Le document WO2017220538 porte sur la structure d'un applicateur et son procédé de fabrication. Cet applicateur est réalisé à partir d'un matériau poreux ou cellulaire, en particulier une mousse injectée, comme une mousse polyuréthane. Il comporte une première face et une deuxième face, l'une et/ou l'autre comportant des cellules ouvertes et résultant d'un traitement de feltisation, et une portion intérieure, moyennant un gradient de porosité entre les faces et la portion intérieure, à savoir que les faces traitées présentent une croûte de porosité plus faible et d'épaisseur comprise entre 0,2 et 3 mm, et que la portion intérieure est à porosité plus élevée et peut permettre de constituer une réserve de produit, les cellules étant ouvertes. Le traitement de feltisation est un procédé de thermoformage dans lequel on comprime le matériau poreux dans un moule, notamment en métal, de manière permanente, avec une montée en température. En variante, il est prévu un flocage.

Le document EP 1 264 672 concerne un procédé impliquant l'introduction d'un matériau polymère mélangé avec un additif fluide supercritique dans un moule,

S'agissant de produit cosmétique à appliquer, l'on recherche constamment que les performances en termes d'utilisation de la partie de chargement/application soient le plus élevées possibles, quant à la facilité d'emploi, l'impression tactile ressentie par l'utilisateur (comme la douceur), le déplacement de la partie de chargement/application sur le corps humain lorsque cela est prévu, l'efficacité du chargement de la partie de chargement/application avec le produit à appliquer, l'efficacité, la précision et la bonne répartition du produit appliqué, la compression élastique en direction transversale, et une capacité appropriée de flexion élastique transversale.

Enfin, il importe que l'applicateur et la partie de chargement/application puissent être fabriqués en grande série de façon efficace et qualitative à un coût raisonnable.
L'invention vise à répondre à ces différents problèmes et à satisfaire ces différentes exigences, s'agissant d'un applicateur de type ramassé, comportant une partie de chargement/application du même type.
Tel est le problème à la base de l'invention.
Les professionnels de l'injection des matières plastiques connaissent l'existence de procédés de moulage par injection adaptés à la fabrication d'objets sous forme de mousse, comme des procédés de moussage chimique et des procédés de moussage physique.
S'agissant des procédés de moussage physique mettant en oeuvre un gaz neutre, on en connaît plusieurs variantes, qui toutes pallient l'inconvénient des agents moussants chimiques. Un tel procédé de moussage physique est particulièrement recherché, comparativement aux procédés d'injection classique, en ce qu'il permet une économie de matière et de poids importante pouvant aller jusqu'à 20%, voire plus. Par suite, le débouché naturel d'un tel procédé de moussage physique est la réalisation de pièces volumineuses pour lesquelles la quantité de matière et le poids sont des facteurs décisifs, comme typiquement des pare-chocs ou des tableaux de bord de véhicules.
Dans un procédé de moulage par injection avec moussage physique connu, on porte à température de fusion le matériau thermoplastique constitutif de l'objet à réaliser moyennant l'injection dans celui-ci d'une quantité appropriée de gaz inerte comme du diazote ou du dioxyde de carbone, à l'état supercritique (température d'environ 200°C et pression autour de 200 bars), de sorte à réaliser un mélange homogène du matériau thermoplastique et du gaz à l'état supercritique, lequel est maintenu sous pression et en température et ensuite injecté dans un moule. L'on constate l'apparition dans le mélange moulé de cellules fermées dont la taille croît jusqu'à ce que le matériau thermoplastique soit devenu rigide par suite du refroidissement. Ce procédé est décrit notamment dans les documents EP0923443, EP0952908, EP1165301, EP1264672, EP1275485 et EP1475208.
Dans le procédé de moulage par injection avec moussage physique développé conjointement par le Kunstoff-Institut Lündenscheid et Linde, après séchage, le matériau thermoplastique est imprégné avec le gaz inerte comme du dioxyde de carbone, et ensuite on procède au moulage par injection du mélange homogène du matériau thermoplastique et du gaz inerte, Comme précédemment, l'on constate l'apparition dans le mélange moulé de cellules fermées dont la taille croît jusqu'à ce que le matériau thermoplastique soit devenu rigide par suite du refroidissement.
Quelle que soit la réalisation du procédé de moulage par injection avec moussage physique, l'on a une succession d'étapes dans lesquelles :
- on dispose d'un moule dont la forme de l'empreinte est en correspondance avec la forme de la pièce à fabriquer par le procédé,
- on dispose d'une part, de matière thermoplastique apte à être portée en fusion, injectée et moulée dans le moule, puis refroidie en se solidifiant, d'autre part, de gaz inerte,
- on réalise un mélange de matière thermoplastique et de gaz inerte,
- on procède à une injection-moulage de ce mélange dans le moule,
- une fois la matière thermoplastique refroidie et prise en masse, et son moussage physique réalisé grâce au gaz inerte, on extrait du moule la pièce ainsi fabriquée.

### Présentation de l'invention

Selon un premier aspect, l'invention a pour objet un procédé de fabrication d'un applicateur de produit à appliquer destiné à être appliqué sur une partie superficielle du corps humain, comme un produit cosmétique, comprenant une partie de chargement/application, de type ramassé, ayant une face extérieure, avec :
- la succession d'étapes dans lesquelles :
   a/ on dispose d'un moule dont la forme de l'empreinte est en correspondance avec la forme de la partie de chargement/application,
   b/ on dispose, d'une part, de matière thermoplastique élastomère de dureté avant injection comprise entre 5 Shore A et 70 Shore A, compatible avec le produit à appliquer et apte à être portée en fusion, injectée et moulée dans le moule, puis refroidie en se solidifiant, d'autre part, de gaz inerte apte à la mise en oeuvre d'un processus de moussage physique,
   c/ on réalise un mélange de matière thermoplastique élastomère et de gaz inerte,
   d/ on procède à une injection-moulage de ce mélange dans le moule,
   e/ une fois la matière thermoplastique élastomère refroidie et prise en masse, et son moussage physique réalisé grâce au gaz inerte, on extrait du moule la partie de chargement/application ainsi réalisée, laquelle combine, en son sein, une structure intérieure à cellules fermées et, sur la face extérieure, une structure superficielle microporeuse,
- l'absence d'une étape de dépôt sur la structure superficielle microporeuse de la partie de chargement/application précédemment réalisée d'un matériau d'adhésion de floc ou de floc.

La constitution de la partie de chargement/application ainsi réalisée est favorable à ses performances d'utilisation en termes d'impression tactile ressentie par l'utilisateur, d'efficacité du chargement avec le produit à appliquer puis de son application, le cas échéant de déplacement de la partie de chargement/application sur le corps humain lorsque cela est prévu, de compression élastique en direction transversale, et de capacité appropriée de flexion élastique transversale.

Selon une réalisation, on injecte le gaz inerte à l'état supercritique dans la matière thermoplastique élastomère préalablement amenée en fusion, de sorte à les mélanger, et on maintien ce mélange sous pression et en température, et ensuite on injecte ce mélange de matière thermoplastique élastomère et de gaz en fusion dans le moule.

Selon une réalisation, on dispose d'un moule dont l'empreinte a une forme telle que la partie de chargement/application moulée comporte, en monobloc, une portion de chargement/application et une portion de fixation, disposées bout à bout le long d'une direction principale.

Selon une réalisation, on dispose d'un moule dont l'empreinte a une forme telle que la portion de chargement/application comporte, vers la structure superficielle microporeuse, au moins une macro zone superficielle localisée ouverte vers l'extérieur de la portion de chargement/application, ayant une conformation adaptée au chargement de produit à appliquer, comme une concavité, un creux, une dépression, une rainure, un sillon, un godron creux.

Selon une caractéristique, avec le moussage physique on obtient une structure à fonction barrière entre la structure superficielle microporeuse et la structure intérieure, substantiellement pleine et empêchant la communication entre les micropores superficiels et les cellules fermées.

Selon une caractéristique, avec le moussage physique on réalise une structure superficielle microporeuse comportant une pluralité de micropores superficiels, ouverts et débouchant, non communicants avec les cellules intérieures fermées de la structure intérieure.

Selon une réalisation, avec le moussage physique on réalise une structure intermédiaire entre la structure superficielle microporeuse et la structure intérieure à cellules fermées, la structure intermédiaire étant substantiellement pleine et empêchant la communication entre les micropores superficiels et les cellules fermées.

Selon une réalisation, le procédé comporte une étape d'association de la partie de chargement/application et d'une partie de rigidification apte à conférer de la tenue à la portion de chargement/application avec une capacité appropriée de flexion élastique transversale, la partie de rigidification faisant partie de l'applicateur, dans laquelle on positionne la partie de rigidification et la partie de chargement/application l'une par rapport à l'autre de sorte que la partie de rigidification s'étende dans la direction principale à l'intérieur de la partie de chargement/application, en particulier dans un tronçon de sa portion de chargement/application attenant à sa portion de fixation.

Selon une réalisation, le procédé comporte une étape d'association rigide de la portion de fixation de la partie de chargement/application et d'une partie de fixation rigide faisant partie de l'applicateur, dans laquelle on positionne la portion de fixation et la partie de fixation rigide l'une par rapport à l'autre de sorte que leur association soit latérale par rapport à la direction principale, par bi injection de la partie de chargement/application et de la partie de fixation rigide.

Selon une réalisation, le procédé comporte une étape d'association rigide d'une partie de fixation rigide et d'une partie d'extension, la partie de fixation rigide et la partie d'extension faisant partie de l'applicateur, dans laquelle on positionne la partie de fixation rigide et la partie d'extension l'une par rapport à l'autre de sorte que la partie d'extension s'étende à partir de la partie de fixation rigide dans la direction principale du côté opposé à la portion de chargement/application de la partie de chargement/application.

Selon une réalisation, le procédé comporte une étape d'association rigide de la portion de fixation de la partie de chargement/application et d'une partie d'extension, faisant partie de l'applicateur, dans laquelle on positionne la portion de fixation et la partie d'extension l'une par rapport à l'autre de sorte que la partie d'extension s'étende à partir de la portion de fixation dans la direction principale du côté opposé à la portion de chargement/application de la partie de chargement/application.

Selon un deuxième aspect, l'invention a pour objet un applicateur de produit à appliquer destiné à être appliqué sur une partie superficielle du corps humain, directement fabriqué par le procédé de fabrication qui vient d'être décrit.

Selon un troisième aspect, l'invention a pour objet un applicateur d'un produit destiné à être appliqué sur une partie superficielle du corps humain, comme un produit cosmétique, comprenant une partie de chargement/application du produit à appliquer de type ramassé, ayant une face extérieure, ayant une direction principale, dans lequel :
- la partie de chargement/application est réalisée par le procédé qui vient d'être décrit, avec une matière thermoplastique élastomère de dureté avant injection comprise entre 5 Shore A et 70 Shore A, compatible avec le produit à appliquer et un gaz inerte,
- la partie de chargement/application qui combine, en son sein, une structure intérieure à cellules fermées comportant une pluralité de cellules intérieures fermées et, sur la face extérieure, une structure superficielle microporeuse, comportant une pluralité de micropores superficiels, ouverts et débouchant, non communicants avec les cellules intérieures fermées de la structure intérieure,
- tout matériau d'adhésion de floc ou de floc est absent sur la structure superficielle microporeuse.

Cette constitution de la partie de chargement/application étant favorable à ses performances d'utilisation en termes d'impression tactile ressentie par l'utilisateur, d'efficacité du chargement avec le produit à appliquer, d'application du produit à appliquer puis de son application, le cas échéant de déplacement de la partie de chargement/application sur le corps humain lorsque cela est prévu, de compression élastique en direction transversale, et de capacité appropriée de flexion élastique transversale.

Selon des caractéristiques :
- les cellules fermées de la structure intérieure sont et restent vides de produit à appliquer,
- les micropores de la structure superficielle microporeuse permettent une certaine rétention de produit à appliquer.

Selon une caractéristique, la structure intérieure comporte une pluralité de cellules intérieures fermées dont la taille tend à être plus grande en fonction de leur profondeur par rapport à la structure superficielle microporeuse et à la face extérieure.

Selon une réalisation, la partie de chargement/application comporte une structure intermédiaire entre la structure superficielle microporeuse et la structure intérieure à cellules fermées, la structure intermédiaire étant substantiellement pleine et empêchant la communication entre les micropores superficiels et les cellules fermées.

Selon une réalisation, la partie de chargement/application comporte, en monobloc, une portion de chargement/application et une portion de fixation, disposées bout à bout le long d'une direction principale.

Selon une réalisation, outre les micropores de la structure superficielle microporeuse permettant une certaine rétention de produit à appliquer, la portion de chargement/application de la partie de chargement/application comporte au moins une macro zone superficielle localisée ouverte vers l'extérieur de la portion de chargement/application, ayant une conformation apte et destinée à être chargée de produit à appliquer, comme une concavité, un creux, une dépression, une rainure, un sillon, un godron creux. Et, selon une réalisation, la au moins une macro zone superficielle localisée ouverte comporte des micropores de la structure superficielle microporeuse.

Selon une réalisation, l'applicateur comporte une partie de rigidification apte à conférer de la tenue à la portion de chargement/application avec une capacité appropriée de flexion élastique transversale, associée à la partie de chargement/application, la partie de rigidification et la partie de chargement/application étant positionnées l'une par rapport à l'autre de sorte que la partie de rigidification s'étende dans la direction principale à l'intérieur de la partie de chargement/application, en particulier dans un tronçon de sa portion de chargement/application attenant à sa portion de fixation.

Selon une réalisation, l'applicateur comporte une partie de fixation rigide associée rigidement à la portion de fixation de la partie de chargement/application, la partie de fixation rigide et la portion de fixation étant positionnées l'une par rapport à l'autre de sorte que leur association soit latérale par rapport à la direction principale.

Selon une réalisation, l'applicateur comporte une partie d'extension associée rigidement à la partie de fixation rigide, en particulier par bouterollage, la partie d'extension et la partie de fixation rigide étant positionnées l'une par rapport à l'autre de sorte que la partie d'extension s'étende à partir de la partie de fixation rigide dans la direction principale du côté opposé à la portion de chargement/application de la partie de chargement/application.

Selon une réalisation, l'applicateur comporte une partie d'extension associée rigidement à la portion de fixation de la partie de chargement/application, la partie d'extension et la portion de fixation de la partie de chargement/application étant positionnées l'une par rapport à l'autre de sorte que la partie d'extension s'étende à partir de la portion de fixation dans la direction principale du côté opposé à la portion de chargement/application de la partie de chargement/application.

Selon les cas, la partie de chargement/application et la partie de fixation rigide forment une même pièce réalisée par bi injection, la partie de fixation rigide étant dépourvue d'une structure intérieure à cellules fermées ou bien la partie d'extension et la partie de fixation rigide forment une même pièce.

Selon une caractéristique, la partie de chargement/application, la portion de chargement/application, est de type ramassé, sans parties fines allongées, comme des poils, des filaments, des dents des picots ou équivalents.

Selon les cas, la portion de chargement/application présente une forme extérieure choisie parmi les formes de de boule, de cône, d'ovoïde, de bulbe, de tonneau, de diabolo, de pyramide, de palette ou spatule, de cuillère, le cas échéant avec une cavité débouchante ménagée entre des bras, ou analogue, etc., le cas échéant avec des celles ressemblant à celles-ci, celles dérivées de celles-ci, celles comprenant une partie de celles-ci, comme des secteurs, des calottes.

Selon une réalisation, la portion de chargement/application présente une forme extérieure dont l'extrémité libre a une dimension transversale qui diminue en allant vers l'apex.

Selon une réalisation, l'applicateur comporte une partie de manipulation et/ou une partie d'association rigide amovible à un récipient et/ou une partie d'obturation de l'ouverture d'un récipient apte et destiné à recevoir le produit à appliquer, en association rigide avec la partie d'extension du côté opposé à la partie de chargement/application.

Selon une caractéristique, la partie de chargement/application est d'une taille hors tout maximale de l'ordre du centimètre pour la longueur et le diamètre, et d'un poids, de l'ordre de 1 gramme.

Selon un quatrième aspect, l'invention a pour objet un ensemble d'application comportant un applicateur tel qu'il vient d'être décrit et un récipient comportant une ouverture, apte et destiné à recevoir le produit à appliquer.

Selon une réalisation, l'applicateur et le récipient comportent des moyens d'association rigide mutuelle amovible et/ou l'applicateur comporte une partie d'obturation de l'ouverture du récipient.

Selon une réalisation particulière pour un produit à appliquer sous une forme allant de liquide à pâteuse, comme pour du mascara, l'ensemble d'application comporte un essoreur monté dans l'ouverture du récipient.

Selon une caractéristique, la structure intérieure à cellules fermées est telle que lorsque la portion de chargement/application de la partie de chargement/application est déplacée à travers l'essoreur, elle est comprimée radialement élastiquement.

### Brève description des figures

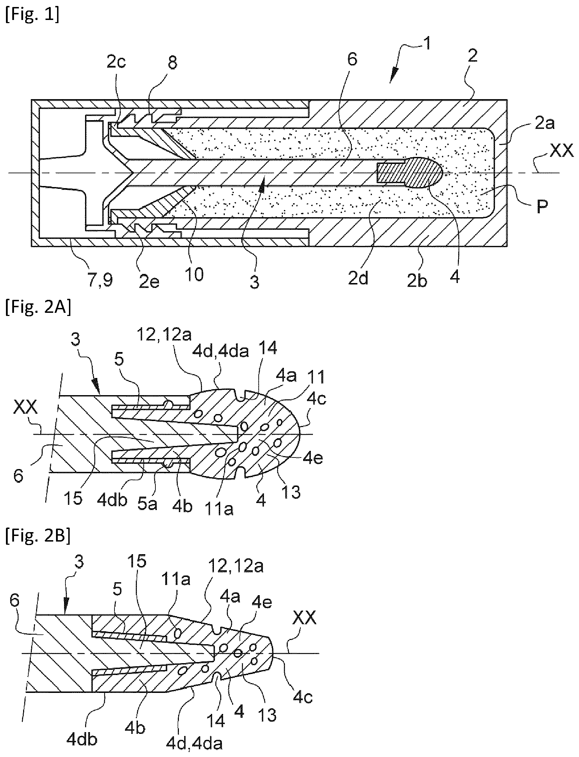

[Fig. 1] est une vue en coupe axiale (direction générale XX) d'un ensemble d'application comportant un récipient et un applicateur.
[Fig. 2A], est une vue partielle en coupe axiale d'une variante de réalisation d'applicateur, montrant sa partie de chargement/application avec sa portion de chargement/application et sa portion de fixation, chacun des applicateurs comportant également une partie de fixation et une partie d'extension,
[Fig. 2B], est une vue partielle en coupe axiale d'une variante de réalisation d'applicateur, montrant sa partie de chargement/application avec sa portion de chargement/application et sa portion de fixation, chacun des applicateurs comportant également une partie de fixation et une partie d'extension,

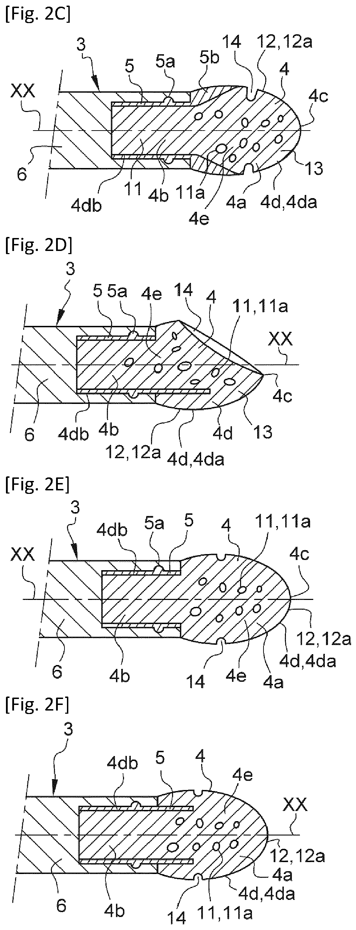

[Fig. 2C], est une vue partielle en coupe axiale d'une variante de réalisation d'applicateur, montrant sa partie de chargement/application avec sa portion de chargement/application et sa portion de fixation, chacun des applicateurs comportant également une partie de fixation et une partie d'extension,
[Fig. 2D], est une vue partielle en coupe axiale d'une variante de réalisation d'applicateur, montrant sa partie de chargement/application avec sa portion de chargement/application et sa portion de fixation, chacun des applicateurs comportant également une partie de fixation et une partie d'extension,
[Fig. 2E] est une vue partielle en coupe axiale d'une variante de réalisation d'applicateur, montrant sa partie de chargement/application avec sa portion de chargement/application et sa portion de fixation, chacun des applicateurs comportant également une partie de fixation et une partie d'extension,
[Fig. 2F] est une vue partielle en coupe axiale d'une variante de réalisation d'applicateur, montrant sa partie de chargement/application avec sa portion de chargement/application et sa portion de fixation, chacun des applicateurs comportant également une partie de fixation et une partie d'extension, et pour les figures 2A et 2B comportant également une partie de rigidification intérieure appartenant à la partie d'extension, alors que pour chaque variante de réalisation, la partie de chargement/application et la partie de fixation sont réalisés par bi-injection et ainsi mutuellement solidaires tandis que la partie d'extension réalisée indépendamment est rendue solidaire de la partie de fixation par bouterollage. Sur ces six vues, la partie d'extension est représentée de courte longueur.

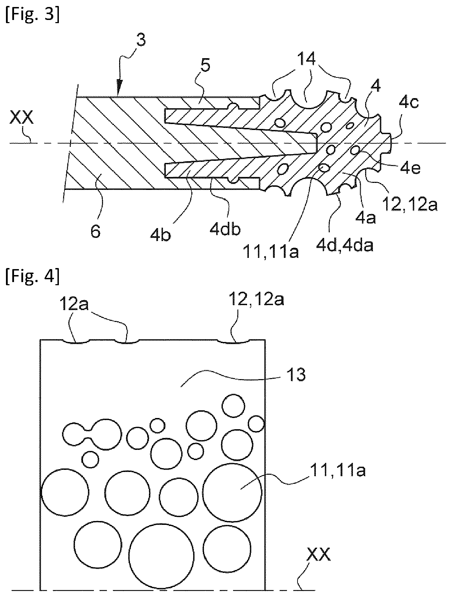

[Fig. 3] est une vue partielle en coupe axiale d'une autre variante de réalisation d'applicateur, montrant sa partie de chargement/application avec sa portion de chargement/application et sa portion de fixation, l'applicateur comportant également une partie de fixation, une partie d'extension, et une partie de rigidification intérieure formant un ensemble monobloc.
[Fig. 4] est une vue schématique, en coupe, partielle selon la ligne de coupe IV-IV de la figure 2A, à plus grande échelle, de la partie de chargement/application, illustrant sa structure intérieure à cellules fermées comportant une pluralité de cellules intérieures fermées, sa structure superficielle microporeuse comportant une pluralité de micropores superficiels, ouverts et débouchant, et sa structure intermédiaire, substantiellement pleine.

### Description détaillée de l'invention

La description détaillée qui suit doit se comprendre en référence à ce qui a été exposé précédemment auquel il est fait expressément référence, quant au contexte de l'invention et au sens de termes et expressions définis, comme notamment « produit à appliquer », « partie de chargement/application », « appliquer » et « application », «produit cosmétique », « effilé », « ramassé », « moussage physique ». Par suite, ce contexte et ces définitions ne sont pas de nouveau exposés dans la description détaillée qui suit.

Le terme « partie » ou « portion » doit être compris comme signifiant un élément particulier d'un tout. Selon les cas, cet élément est particulier au regard de caractéristiques structurelles et/ou de caractéristiques fonctionnelles. Selon les cas, cet élément est soit une entité matérielle propre, comme une pièce, matériellement distincte d'autres entités, soit au contraire, il appartient et est intégré à l'entité formant le tout, comme un élément du tout ayant une fonction propre. Ainsi, selon les cas, lorsqu'un tout comporte plusieurs parties ou portions, ces parties ou portions soit sont formées de pièces distinctes soit ne sont pas formées de pièces distinctes.

L'expression « direction principale » appliquée à un élément doit être comprise comme signifiant la ligne fictive médiane autour et le long de laquelle est disposé l'élément. Cette ligne est rectiligne ou bien curviligne ou autre. Par exemple, pour un élément allongé en forme de cône, la direction principale est l'axe du cône passant par le sommet.

Le terme « latéral » doit être compris comme qualifiant ce qui est disposé sur le côté de la direction principale.

Le terme « transversal » doit être compris comme qualifiant ce qui est substantiellement et globalement perpendiculaire par rapport à la direction générale XX.

On se réfère à la figure 1 qui illustre une réalisation possible d'un ensemble d'application 1 comportant un récipient 2 et un applicateur 3.

Dans cette réalisation, le récipient 2 a une forme générale de tube allongé le long d'une direction principale XX avec un fond 2a, une paroi latérale périphérique 2b et à l'opposé du fond 2a une ouverture 2c.

Le récipient 2 ménage un espace intérieur 2d apte et destiné à recevoir, d'une part, un produit à appliquer P, ici par exemple un produit cosmétique sous forme liquide, pâteuse, émulsion, ou de poudre, comme du mascara, d'autre part, l'applicateur 3, ou du moins une partie de chargement/application 4 de celui-ci, de sorte à plonger dans la masse de produit à appliquer P se trouvant dans l'espace intérieur 2d.

L'invention vise à la fois l'ensemble d'application 1 empli de produit à appliquer, assemblé, fermé, et prêt à l'emploi, que l'ensemble d'application 1 désassemblé ou non totalement assemblé ou vide de produit à appliquer P.

L'applicateur 3 comprend, s'étendant dans la direction principale XX, la partie de chargement/application 4, s'étendant également dans la direction principale XX, une partie de fixation rigide 5, une partie d'extension 6 disposées bout à bout. L'applicateur 3 comprend également une partie de manipulation 7, une partie d'association rigide amovible 8 au récipient 2, une partie d'obturation 9 de l'ouverture 2c du récipient 2, lesquelles parties 7, 8 et 9 sont en association rigide avec la partie d'extension 6 du côté opposé à la partie de chargement/application 4. Dans la réalisation représentée, la partie de manipulation 7, la partie d'association rigide amovible 8 et la partie d'obturation 9 se présentent comme un seul et même ensemble en forme de capuchon de manipulation, ici pourvu d'un filetage interne apte à coopérer avec un filetage externe dont est pourvu le col 2e. Ces deux filetages complémentaires constituent des moyens d'association rigide mutuelle amovible récipient 1 / applicateur 3.

Dans cette réalisation, l'ensemble d'application 1 comporte également un essoreur 10 monté sur le col 2e dans l'ouverture 2c.

Cette réalisation de l'ensemble d'application 1 n'est pas exclusive de variantes. Par exemple, le récipient 2 peut être autre qu'un tube, l'applicateur 3 peut s'étendre non pas sur une seule direction principale XX, mais sa partie de chargement/application 4 peut être inclinée par rapport à la partie d'extension 6, les moyens d'association rigide mutuelle amovible récipient 1 / applicateur 3 peuvent être autres qu'un filetage interne et un filetage externe. L'essoreur peut être réalisé de plusieurs manières possibles et, éventuellement, il n'y a pas d'essoreur. Et, selon les cas, la direction principale XX peut être rectiligne ou bien curviligne ou autre. Dès lors, l'on considère que la direction principale XX dont il est question ultérieurement est en substance celle de la partie de chargement/application 4.

La réalisation de l'ensemble d'application 1 décrite n'est pas exclusive d'autres réalisations différentes, par exemple adaptées à un produit cosmétique étant sous forme de poudre ou de rouge à lèvres ou d'un produit à appliquer par tamponnage.

On se réfère plus spécialement aux figures 2A à 2F et 3 qui illustrent un applicateur 3 adapté à l'application d'un produit P, comme un produit cosmétique, à appliquer sur une partie superficielle du corps humain, comme notamment les yeux, les joues, les lèvres. Sa partie de chargement/application 4 comporte, en monobloc, une portion de chargement/application 4a et une portion de fixation 4b, disposées bout à bout le long de la direction principale XX. Si les deux portions 4a et 4b font partie de la seule et même pièce qu'est la partie de chargement/application 4, elles sont identifiées pour distinguer les fonctions respectives qu'elles remplissent. La portion de chargement/application 4a a pour fonction le chargement du produit à appliquer P puis ultérieurement son application sur la partie superficielle du corps humain considérée. La portion de fixation 4b a pour fonction de fixer la partie de chargement/application 4 sur la partie de fixation rigide 5 (figures 2A à 2F) ou la partie d'extension 6 (figure 3), selon les réalisations, de sorte qu'elle puisse être utilisée.

Comme cela est illustré par les figures 2A à 2F et 3, l'applicateur 3, et donc sa partie de chargement/application 4, est de type ramassé et non pas de type effilé, c'est-à-dire qu'elle est dépourvue de parties fines allongées, comme des poils, des filaments, des dents des picots ou équivalents.

Etant de type ramassé, selon les cas et l'usage envisagé, la portion de chargement/application 4a présente une forme extérieure choisie parmi les formes de boule, de cône, d'ovoïde, de bulbe, de tonneau, de diabolo, de pyramide, de palette ou spatule, de cuillère, le cas échéant avec une cavité débouchante ménagée entre des bras, ou analogue, etc., le cas échéant avec des, cette liste n'étant qu'exemplative, les formes ressemblant à celles qui viennent d'être mentionnées, les formes dérivées de celles qui viennent d'être mentionnées, les formes comprenant une partie seulement de celles qui viennent d'être mentionnées, comme des secteurs ou des calottes.

Selon les cas et l'usage envisagé, la forme extérieure de la portion de chargement/application 4a est, ou n'est pas, de révolution ou symétrique, par rapport à la direction générale XX.

Selon les cas et l'usage envisagé, la portion de chargement/application 4a présente une forme extérieure dont l'extrémité libre 4c, opposée à la portion de fixation 4b, a une dimension transversale qui diminue en allant vers l'apex. Comme cela est illustré par les figures 2A à 2F et 3, l'extrémité libre formant apex n'est pas fine et allongée, mais arrondie.

La partie de chargement/application 4 est réalisée en une matière thermoplastique élastomère M de dureté avant injection comprise entre 5 Shore A et 70 Shore A, laquelle est dénommée conventionnellement matière thermoplastique élastomère M.

La partie de chargement/application 4 est d'une taille hors tout maximale de l'ordre du centimètre pour la plus grande longueur comptée dans la direction principale et le diamètre transversal, et d'un poids, de l'ordre de 1 gramme. Dans les réalisations représentées sur les figures, l'épaisseur transversale est variable.

Bien que petite en taille, en volume et en poids, la partie de chargement/application 4 est réalisée par un procédé d'injection moulage avec moussage physique au moyen d'un gaz neutre G (et donc sans aucun moussage chimique).

Avec ce moussage physique, au moyen du gaz neutre G, de cette matière thermoplastique élastomère M, la partie de chargement/application 4 combine, en son sein 4e, c'est-à-dire dans sa masse, une structure intérieure 11 à cellules fermées comportant une pluralité (et même une multiplicité) de cellules intérieures fermées 11a et, sur sa face extérieure 4d, une structure superficielle microporeuse 12, comportant une pluralité de micropores superficiels, ouverts et débouchant 12a, non communicants avec les cellules intérieures fermées 11a de la structure intérieure 11. Les deux structures 11 et 12 sont également fonctionnelles. Elles sont permanentes, c'est-à-dire qu'elles existent dès que la partie de chargement/application 4 est réalisée par injection moulage moyennant le moussage physique et qu'elles continuent d'exister par la suite lors de l'utilisation de partie de chargement/application 4 pour appliquer le produit à appliquer P.

Le qualificatif « extérieure » de l'expression « face extérieure » de la partie de chargement/application 4, doit être compris comme signifiant ce qui constitue le bord le plus éloigné et la limite de la partie de chargement/application 4.

La face extérieure 4d comporte une portion 4da appartenant à la portion de chargement/application 4a de la partie de chargement/application 4, et une portion 4db appartenant à sa portion de fixation 4b. La portion 4da de la face extérieure 4d appartenant à la portion de chargement/application 4a est une portion de chargement/application. Cette portion 4da est libre, en contact avec le dehors, apparente, accessible. Elle est apte à venir au contact du produit à appliquer P se trouvant dans le récipient 2, notamment pour le charger et elle est apte à être appliquée sur la partie superficielle du corps humain considérée pour l'application du produit à appliquer P sur celle-ci.

Par « structure intérieure », il faut comprendre l'agencement de l'intérieur de la partie de chargement/application 4, en son sein 4e. Par « structure superficielle », il faut comprendre l'agencement de la face extérieure 4d de la partie de chargement/application 4. L'intérieur, le sein 4e, est ce qui est écarté de la face extérieure 4d dans la masse de la partie de chargement/application 4.

Par « cellule intérieure fermée », il faut comprendre un espace clos, sans communication avec ce qui lui est extérieur, vide de la matière thermoplastique élastomère M constitutive de la partie de chargement/application 4, empli de gaz G consécutivement à la mise en œuvre du moussage physique. Une telle cellule 11a est compressible, dans une certaine mesure, lorsqu'elle est soumise à une contrainte extérieure de compression. Cette compression est élastique, la cellule 11a revenant à l'état qu'elle avait avant compression une fois qu'a cessé la contrainte extérieure de compression.

Deux cellules 11a adjacentes sont séparées l'une de l'autre par une certaine épaisseur de la matière thermoplastique élastomère M constitutive de la partie de chargement/application 4.

Une cellule intérieure fermée 11a peut être formée soit par un vide unique localisé continu, soit par quelques vides adjacents communiquant entre eux, situés dans une région d'étendue limitée. Ainsi, sur une étendue plus importante de la partie de chargement/association 4, les cellules 11a sont fermées et séparées les unes des autres, sans communication entre elles. Ainsi, la pluralité des cellules 11a ne forme pas un réseau communiquant ouvert pour l'ensemble de la partie de chargement/application 4.

Lors de la mise en œuvre de l'applicateur 3, les cellules fermées 11a de la structure intérieure 11 sont et restent vides de produit à appliquer P, celui-ci ne pouvant les atteindre, y compris en cas de contrainte extérieure de compression suivie d'un relâchement par absence de contrainte.

La forme des cellules 11a découle du moussage physique réalisé. De façon théorique en l'absence d'un différentiel de contrainte à l'endroit d'une cellule 11a, celle-ci devrait avoir une forme sphérique ou pseudo sphérique. Mais l'obtention d'un tel résultat peut être contrarié s'il existe un différentiel de contrainte ou une hétérogénéité de la matière.

Les paramètres de réglage du moussage physique influent sur les caractéristiques des cellules 11a comme la taille moyenne ou médiane, la répartition des tailles, le nombre, la densité, la disposition et la répartition dans l'espace. Dans une réalisation, il est prévu que la partie de chargement/application 4 comporte une multiplicité de cellules 11a (par exemple plus d'une centaine) disposées et réparties dans l'ensemble de la partie de chargement/application 4, à l'exception d'une structure intermédiaire 13, dont il est question par la suite.

La structure intérieure 11 est donc l'inverse d'une éponge dans laquelle les cellules sont communicantes entre elles et avec ce qui est extérieur à sa face extérieure, de sorte à pouvoir se charger de tout produit se trouvant à l'extérieur de sa face extérieure.

La structure intérieure 11 n'est pas non plus comparable à une simple cavité, même fermée, qui serait ménagée dans la partie de chargement/application 4. Elle n'est pas non plus comparable à une partie de chargement/application 4 qui serait entièrement creuse.

Par « micropore superficiel, ouvert et débouchant », il faut comprendre une très petite cavité dans la face extérieure 4d de la partie de chargement/application 4, laquelle petite cavité étant ouverte et non fermée et débouchant à l'extérieur de la face extérieure 4d de la partie de chargement/application 4. Un tel micropore 12a peut être considéré comme une altération de l'état de surface de la face extérieure 4d, résultant du moussage physique. Un tel micropore 12a peut être qualifié de « micro » dans la mesure où il est d'une profondeur négligeable par rapport à la face extérieure 4d, où il est invisible ou pratiquement invisible à l'œil nu, et où il n'est pas ou pratiquement pas sensible individuellement au toucher. La présence des micropores 12a contribue, avec la structure interne 11, à un toucher (toucher statique ou glissement) comportant une impression de douceur, qu'il y ait ou non du produit à appliquer P chargé. L'utilisateur qui applique la partie d'application pour l'application de produit à appliquer P sur la partie superficielle du corps humain considérée ne perçoit pas de rigidité désagréable. Un tel micropore 12a est vide de la matière thermoplastique élastomère M constitutive de la partie de chargement/application 4. Une fois l'applicateur 3 fabriqué, et avant emploi, un micropore 12a est vide. Lors du chargement de la partie de chargement/application 4 avec le produit à appliquer P, le micropore 12a s'emplit du produit à appliquer P, les micropores 12a permettant une certaine rétention de produit à appliquer P.

La forme des micropores 12a découle du moussage physique réalisé. De façon théorique, un micropore 12a est tel que sa profondeur (comptée perpendiculairement à la face extérieure 4d) est très faible et presque négligeable par rapport à la dimension de son ouverture (comptée dans la face extérieure 4d).

Les paramètres de réglage du moussage physique influent sur les caractéristiques des micropores 12a comme la taille, le nombre, la densité, la disposition et la répartition sur la face extérieure 4d. Dans une réalisation, il est prévu que la partie de chargement/application 4 comporte une multiplicité de micropores 12a disposés et répartis sur l'ensemble de la partie de chargement/application 4

La structure superficielle 12 est donc l'inverse de la structure superficielle d'une éponge.

La structure superficielle 12 n'est pas non plus comparable à une structure alvéolaire qui serait ménagée sur la face extérieure 4d de la partie de chargement/application 4. Elle n'est pas non plus comparable à une macro zone superficielle localisée ouverte, comme une concavité, un creux, une dépression, une rainure, un sillon, un godron creux.

La structure intérieure 11 à cellules fermées 11a et la structure superficielle 12 à micropores 12a, sont telles que lorsque la portion de chargement/application 4a de la partie de chargement/application 4 est déplacée à travers l'essoreur 10, la structure intérieure 11 est comprimée radialement élastiquement et la structure superficielle 12 essuyée de sorte à enlever le produit à appliquer P en excès, du produit à appliquer P restant dans les micropores 12a.

Pour que la portion de chargement/application 4a de la partie de chargement/application 4 puisse être chargée d'une quantité suffisante de produit (en vue de l'efficacité de l'application et pour éviter de devoir procéder à des recharges de produit à appliquer P trop fréquentes), il peut aussi être prévu, pour le chargement et la rétention en produit à appliquer P, que la portion 4da de la face extérieure 4d de la portion de chargement/application 4a de la partie de chargement/application 4 comporte au moins une macro zone 14 superficielle localisée ouverte vers l'extérieur (et donc vers le produit à appliquer P se trouvant dans l'espace intérieur 2d du récipient 2), dont la conformation est conçue pour être apte et destinée à être chargée de produit à appliquer P. Une telle conformation peut être qualifiée de « macro zone », dans la mesure où, à l'inverse d'un micropore, elle est d'une profondeur substantielle par rapport à l'enveloppe extérieure de la face extérieure 4, et où elle est visible à l'œil nu et sensible individuellement au toucher.

Une telle macro zone 14 peut être réalisée sous la forme d'une concavité, d'un creux, d'une dépression, d'une rainure, d'un sillon, d'un godron creux, suffisamment marqué et profond.

Une telle macro zone superficielle localisée ouverte 14 peut comporter des micropores 12a de la structure superficielle microporeuse 12.

Avec une telle macro zone 14, les micropores 12a, et un essoreur 10, l'on tend à minimiser ou supprimer la constitution sur la portion 4da de la face extérieure 4d d'une épaisseur de produit à appliquer P gênant son application sur la partie superficielle du corps humain considérée.

Avec le moussage physique au moyen du gaz neutre G, de la matière thermoplastique élastomère M, on peut réaliser dans la partie de chargement/application 4 une structure à fonction barrière intermédiaire 13 entre les deux structures 11 et 12. Cette structure à fonction barrière 13 est substantiellement pleine, c'est-à-dire formée de matière thermoplastique élastomère M, et empêche ainsi la communication entre les micropores superficiels 12a et les cellules fermées 11a, et donc le passage de produit à appliquer P jusqu'à la structure intérieure 11 (figure 4). En d'autres termes, il existe un continuum de matière thermoplastique élastomère M entre la structure intérieure 11 à cellules fermées et la structure superficielle 12 microporeuse. Ce continuum peut être d'épaisseur plus ou moins grande et plus ou moins régulière et de limite est plus ou moins floue. Le fait même qu'il n'y ait pas de communication entre les micropores 12a et les cellules fermées 11a traduit l'existence d'une telle structure à fonction barrière 13, sans la nécessité d'une couche de matière thermoplastique élastomère M, d'épaisseur substantielle, bien limitée et identifiée comme constitutive d'une structure matérielle.

Un quelconque matériau d'adhésion de floc ou un quelconque floc est absent sur la face extérieure 4d et sur la structure superficielle microporeuse 11, et cela contrairement aux connaissances générales de l'homme du métier des applicateurs du type considéré. Par suite, l'applicateur 3 est dépourvu de floc et présente au toucher directement la face extérieure 4d avec la structure superficielle microporeuse 11, et non un floc ou une face floquée.

La constitution de la partie de chargement/application 4 qui vient d'être décrite est favorable à ses performances d'utilisation en termes d'impression tactile ressentie par l'utilisateur, d'efficacité du chargement avec le produit à appliquer P, de processus d'application du produit à appliquer P et de rendu de cette application, le cas échéant de déplacement de la partie de chargement/application 4 sur la partie du corps humain considérée lorsque cela est prévu, de compression élastique en direction transversale, et de capacité appropriée de flexion élastique transversale, par exemple lors de l'application sur la partie du corps humain considérée.

La partie de chargement/application combine une tenue d'ensemble avec une certaine capacité appropriée de flexion élastique transversale, une capacité de compression élastique localisée, et un toucher doux.

Un applicateur 3 - du moins sa partie de chargement/application 4 - prêt à l'usage est réalisé moyennant la mise en œuvre du procédé qui est maintenant décrit, qui diffère du procédé classique d'injection-moulage.

En premier lieu, le procédé de l'invention comporte la succession d'étapes suivantes :
a/ on dispose d'un moule dont la forme de l'empreinte est en correspondance avec la forme de la partie de chargement/application 4,
b/ on dispose, d'une part, de la matière thermoplastique élastomère M de dureté avant injection comprise entre 5 Shore A et 70 Shore A, compatible avec le produit à appliquer P et un gaz G inerte et apte à être portée en fusion, injectée et moulée dans le moule, puis refroidie en se solidifiant, d'autre part, de gaz G inerte apte à la mise en œuvre d'un processus de moussage physique,
c/ on réalise un mélange de matière thermoplastique élastomère M et de gaz G inerte,
d/ on procède à une injection-moulage de ce mélange dans le moule,
e/ une fois la matière thermoplastique élastomère M refroidie et prise en masse, et son moussage physique réalisé grâce au gaz G inerte, on extrait du moule la partie de chargement/application 4 ainsi réalisée.

Comme exposé précédemment, la partie de chargement/application 4 présente alors la combinaison d'une structure intérieure 11 à cellules fermées 11a et d'une structure superficielle microporeuse 12, dont les caractéristiques sont celles qui ont été précédemment décrites.

En second lieu, avec le procédé de l'invention, il n'y a pas d'étape de dépôt sur la structure superficielle microporeuse 12 précédemment réalisée, d'un matériau d'adhésion de floc ou de floc.

Avec les étapes a/ à e/ précédentes, on réalise directement et en une seule fois la partie de chargement/application 4.

Le moussage est exclusivement physique au moyen du gaz neutre G, et non chimique.

Il peut faire l'objet de diverses réalisations.

Le gaz G est par exemple du diazote ou du dioxyde de carbone, ces deux réalisations n'étant pas exclusives d'autres, dès lors que le gaz G est inerte, apte à la mise en œuvre d'un processus de moussage physique (et non pas chimique).

Dans une réalisation possible, on injecte le gaz G inerte à l'état supercritique dans la matière thermoplastique élastomère M préalablement amenée en fusion, de sorte à les mélanger, et on maintien ce mélange sous pression et en température, et ensuite on injecte ce mélange de matière thermoplastique élastomère M et de gaz G en fusion dans le moule.

Afin que la partie de chargement/application 4 comporte, en monobloc, la portion de chargement/application 4a et la portion de fixation 4b, comme précédemment décrit, on dispose d'un moule dont l'empreinte a une forme complémentaire de la portion de chargement/application 4a et de la portion de fixation 4b.

Afin de réaliser la au moins une macro zone 14 superficielle localisée ouverte vers l'extérieur, comme précédemment décrit, on dispose d'un moule ayant une forme complémentaire de cette macro zone 14.

On se réfère aux figures 2A, 2B et 3 qui illustrent que l'applicateur 3 peut comporter une partie de rigidification 15, apte à conférer de la tenue à la portion de chargement/application 4a tout en ayant une capacité appropriée de flexion élastique transversale. Cette partie de rigidification 15 est associée à la partie de chargement/application 4, les deux parties 15 et 4, étant positionnées l'une par rapport à l'autre de sorte que la partie de rigidification 15 s'étende dans la direction principale XX à l'intérieur de la partie de chargement/application 4, en particulier dans un tronçon de sa portion de chargement/application 4a attenant à sa portion de fixation 4b. La présence d'une telle partie de rigidification 15 permet la réalisation d'un applicateur de type à âme rigide. Dans les réalisations représentées, la partie de rigidification 15 a une dimension transversale plus petite vers la portion de chargement/application 4a et plus grande vers l'opposé la portion de chargement/application 4a. La partie de rigidification 14 est réalisée en un matériau plus dur que la partie de chargement/application 4, de sorte à présenter une certaine rigidité. Selon les cas, la réalisation est soit avec deux pièces distinctes de duretés différentes (figures 2A et 2B), soit avec une seule et même pièce réalisée par bi-injection (figure 3).

Avec une telle réalisation, le procédé comporte également une étape d'association des deux parties 15 et 4.

On se réfère aux figures 2A à 2F et 3 qui illustrent que l'applicateur 3 peut comporter une partie de fixation rigide 5 associée rigidement à la portion de fixation 4b de la partie de chargement/application 4. La partie de fixation rigide 5 et la portion de fixation 4b sont positionnées l'une par rapport à l'autre de sorte que leur association soit latérale, en particulier périphérique, par rapport à la direction principale XX. La partie de fixation rigide 5 a pour fonction de fixer la partie de chargement/application 4 au reste de l'applicateur 3, de sorte à permettre de manœuvrer, mettre en œuvre et utiliser la partie de chargement/application 4, sans avoir à la saisir directement. La partie de fixation rigide 5 est réalisée en un matériau plus dur que la partie de chargement/application 4, de sorte à présenter une certaine rigidité. Selon les cas, la réalisation est soit avec une seule et même pièce (partie de chargement/application 4 / partie de fixation rigide 5) réalisée par bi-injection (figures 2A à 2F et 3), soit avec deux pièces distinctes de duretés différentes. Dans le cas où la partie de fixation rigide 5 est injecté dans le cadre du processus de bi injection, il peut être prévu que cette partie de fixation rigide 5 soit dépourvue d'une structure intérieure à cellules fermées, étant réalisée sans moussage physique.

Dans la réalisation par bi-injection, de la figure 2A, la partie de fixation rigide 5 a une forme de virole de forme générale cylindrique ayant la direction principale XX, disposée à la périphérie de la portion 4db de la face extérieure 4d de la portion de fixation 4b, sans entrer dans la portion de chargement/application 4a, et moyennant une structure à gorge et saillie 5a. Ici, la partie de fixation rigide 5 est située à l'intérieur de l'applicateur 3.

Dans la réalisation de la figure 2B, la partie de fixation rigide 5 a une forme de virole de forme générale tronconique cylindrique ayant la direction principale XX, disposée à la périphérie de la partie de rigidification 15.

La réalisation de la figure 2C est dérivée de celle de la figure 2A, la partie de fixation rigide 5 étant située pour partie à l'intérieur de l'applicateur 3 et pour partie à l'extérieur, vers la portion de chargement/application 4a en l'entourant en formant une sorte de corolle 5b.

La réalisation de la figure 2D est dérivée de celle de la figure 2A, la partie de fixation rigide 5 ayant une forme de cylindre tronqué, de sorte à être en correspondance avec la forme tronquée de la portion de chargement/application 4a.

La réalisation de la figure 2E est identique à celle de la figure 2A, si ce n'est que la partie de chargement/application ne comporte pas d'âme de rigidification.

La réalisation de la figure 2F est identique à celle de la figure 2A, si ce n'est que, contrairement à cette dernière, la partie de fixation rigide 5 entre dans la portion de chargement/application 4a.

La réalisation de la figure 3 est analogue à celle de la figure 2A, si ce n'est que la réalisation est en deux pièces associées par bouterollage, et non pas bi-injection.

Les réalisations qui viennent d'être décrites ne sont pas exclusives d'autres.

Avec de telles réalisations, le procédé comporte également une étape d'association rigide de la partie de fixation rigide 5 et de la portion de fixation 4b de la partie de chargement/application 4.

On se réfère aux figures 2A à 2F qui illustrent une réalisation dans laquelle l'applicateur 3 peut comporter une partie d'extension 6 associée rigidement à la partie de fixation rigide 5. La partie d'extension 6 et la partie de fixation rigide 5 sont positionnées l'une par rapport à l'autre de sorte que la partie d'extension 6 s'étende à partir de la partie de fixation rigide 5 dans la direction principale XX du côté opposé à la portion de chargement/application 4a de la partie de chargement/application 4.

Alors que la partie de chargement/application 4 et la partie de fixation rigide 5 forment une même pièce réalisée par bi injection, la partie de fixation rigide 5 forme une pièce distincte. Avec cette réalisation, le procédé comporte une étape d'association rigide de la partie de fixation rigide 5 et de la partie d'extension 6, par bouterollage.

La partie d'extension s'étend le long de sa direction principale sur une longueur suffisante au regard de la dimension du récipient 2.

La partie d'extension présente une certaine rigidité propre à lui conférer une certaine tenue, le cas échéant avec le cas échéant une capacité appropriée de flexion élastique transversale.

On se réfère à la figure 3 qui illustre une autre réalisation dans laquelle l'applicateur 3 peut comporter une partie d'extension 6 associée rigidement à la portion de fixation 4b de la partie de chargement/application 4. Avec une telle réalisation, la partie d'extension 6 et la partie de fixation rigide 5 forment une même pièce.

Il est entendu que la partie de chargement/application 4 et la partie d'extension 6 s'étendent chacune dans une direction principale, les deux directions principales étant parallèles, et le cas échéant confondues, ou inclinées l'une par rapport à l'autre.

## Revendications

1. Procédé de fabrication d'un applicateur (3) de produit à appliquer (P) destiné à être appliqué sur une partie superficielle du corps humain, comme un produit cosmétique, comprenant une partie de chargement/application (4), de type ramassé, ayant une face extérieure (4d), **caractérisé par** :
- la succession d'étapes dans lesquelles :
a/ on dispose d'un moule dont la forme de l'empreinte est en correspondance avec la forme de la partie de chargement/application (4),
b/ on dispose, d'une part, de matière thermoplastique élastomère (M) de dureté avant injection comprise entre 5 Shore A et 70 Shore A, compatible avec le produit à appliquer (P) et apte à être portée en fusion, injectée et moulée dans le moule, puis refroidie en se solidifiant, d'autre part, de gaz (G) inerte apte à la mise en œuvre d'un processus de moussage physique,
c/ on réalise un mélange de matière thermoplastique élastomère (M) et de gaz (G) inerte,
d/ on procède à une injection-moulage de ce mélange dans le moule,
e/ une fois la matière thermoplastique élastomère (M) refroidie et prise en masse, et son moussage physique réalisé grâce au gaz (G) inerte, on extrait du moule la partie de chargement/application (4) ainsi réalisée, laquelle combine, en son sein, une structure intérieure (11) à cellules fermées (11a) et, sur la face extérieure (4d), une structure superficielle microporeuse (12),
- l'absence d'une étape de dépôt sur la structure superficielle microporeuse (12) de la partie de chargement/application (4) précédemment réalisée d'un matériau d'adhésion de floc ou de floc,
la constitution de la partie de chargement/application (4) ainsi réalisée étant favorable à ses performances d'utilisation en termes d'impression tactile ressentie par l'utilisateur, d'efficacité du chargement avec le produit à appliquer (P) puis de son application, le cas échéant de déplacement de la partie de chargement/application (4) sur le corps humain lorsque cela est prévu, de compression élastique en direction transversale, et de capacité appropriée de flexion élastique transversale.

2. Procédé selon la revendication 1, dans lequel on injecte le gaz (G) inerte à l'état supercritique dans la matière thermoplastique élastomère (M) préalablement amenée en fusion, de sorte à les mélanger, et on maintien ce mélange sous pression et en température, et ensuite on injecte ce mélange de matière thermoplastique élastomère (M) et de gaz (G) en fusion dans le moule.

3. Procédé selon l'une des revendications 1 et 2, dans lequel on dispose d'un moule dont l'empreinte a une forme telle que la partie de chargement/application (4) moulée comporte, en monobloc, une portion de chargement/application (4a) et une portion de fixation (4b), disposées bout à bout le long d'une direction principale (XX).

4. Procédé selon la revendication 3, dans lequel on dispose d'un moule dont l'empreinte a une forme telle que la portion de chargement/application (4a) comporte, vers la structure superficielle microporeuse (12), au moins une macro zone (14) superficielle localisée ouverte vers l'extérieur de la portion de chargement/application (4a), ayant une conformation adaptée au chargement de produit à appliquer (P), comme une concavité, un creux, une dépression, une rainure, un sillon, un godron creux.

5. Procédé selon l'une des revendications 1 à 4, dans lequel avec le moussage physique on réalise une structure intérieure (11) comportant une pluralité de cellules intérieures fermées (11a) dont la taille tend à être plus grande en fonction de leur profondeur par rapport à la structure superficielle microporeuse (12) et à la face extérieure (4d).

6. Procédé selon l'une des revendications 1 à 5, dans lequel avec le moussage physique on réalise une structure superficielle microporeuse (12) comportant une pluralité de micropores (12a) superficiels, ouverts et débouchant, non communicants avec les cellules intérieures fermées (11a) de la structure intérieure (11).

7. Procédé selon l'une des revendications 1 à 6, dans lequel avec le moussage physique on obtient une structure à fonction barrière (13) entre la structure superficielle microporeuse (12) et la structure intérieure (11), substantiellement pleine et empêchant la communication entre les micropores (12a) superficiels et les cellules fermées (11a).

8. Applicateur (3) d'un produit destiné à être appliqué sur une partie superficielle du corps humain, comme un produit cosmétique, comprenant une partie de chargement/application (4) du produit à appliquer (P) de type ramassé, ayant une face extérieure (4d), ayant une direction principale (XX). **caractérisé par** :
- une réalisation de la partie de chargement/application (4) par le procédé selon l'une des revendications 1 à 7, avec une matière thermoplastique élastomère (M) de dureté avant injection comprise entre 5 Shore A et 70 Shore A, compatible avec le produit à appliquer (P) et un gaz (G) inerte,
- la partie de chargement/application (4) qui combine, en son sein, une structure intérieure (11) à cellules fermées comportant une pluralité de cellules intérieures fermées (11a) et, sur la face extérieure (4d), une structure superficielle microporeuse (12), comportant une pluralité de micropores superficiels, ouverts et débouchant (12a), non communicants avec les cellules intérieures fermées (11a) de la structure intérieure (11),
- l'absence sur la structure superficielle microporeuse (12) de tout matériau d'adhésion de floc ou de floc,
cette constitution de la partie de chargement/application (4) étant favorable à ses performances d'utilisation en termes d'impression tactile ressentie par l'utilisateur, d'efficacité du chargement avec le produit à appliquer (P), d'application du produit à appliquer (P) puis de son application, le cas échéant de déplacement de la partie de chargement/application (4) sur le corps humain lorsque cela est prévu, de compression élastique en direction transversale, et de capacité appropriée de flexion élastique transversale.

9. Applicateur (3) selon la revendication 8, dans lequel :
- les cellules fermées (11a) de la structure intérieure (11) sont et restent vides de produit à appliquer (P),
- les micropores (12a) de la structure superficielle microporeuse (12) permettent une certaine rétention de produit à appliquer (P).

10. Applicateur (3) selon l'une des revendications 8 et 9 dans lequel la structure intérieure (11) comporte une pluralité de cellules intérieures fermées (11a) dont la taille tend à être plus grande en fonction de leur profondeur par rapport à la structure superficielle microporeuse et à la face extérieure (12) et à la face extérieure (4d).

11. Applicateur (3) selon l'une des revendications 8 à 10, dans lequel la partie de chargement/application (4) comporte une structure à fonction barrière (13) entre la structure superficielle microporeuse (12) et la structure intérieure (11) à cellules fermées (11a), substantiellement pleine et empêchant la communication entre les micropores (12a) superficiels et les cellules fermées (11a).

12. Applicateur (3) selon l'une des revendications 8 à 11, dans lequel la partie de chargement/application (4) comporte, en monobloc, une portion de chargement/application (4a) et une portion de fixation (4b), disposées bout à bout le long d'une direction principale (XX).

13. Applicateur (3) selon la revendication 12, dans lequel, outre les micropores (12a) de la structure superficielle microporeuse (12) permettant une certaine rétention de produit à appliquer (P), la portion de chargement/application (4a) de la partie de chargement/application (4) comporte au moins une macro zone (14) superficielle localisée ouverte vers l'extérieur de la portion de chargement/application (4a), ayant une conformation apte et destinée à être chargée de produit à appliquer (P), comme une concavité, un creux, une dépression, une rainure, un sillon, un godron creux.

14. Applicateur (3) selon la revendication 13, dans lequel la au moins une macro zone (14) superficielle localisée ouverte comporte des micropores (12a) de la structure superficielle microporeuse (12).

15. Ensemble d'application (1) comportant un applicateur (3) selon l'une des revendications 8 à 14 et un récipient (2) comportant une ouverture (2c), apte et destiné à recevoir le produit à appliquer (P).

16. Ensemble d'application (1) selon la revendication 15, dans lequel la structure intérieure (11) à cellules fermées (11a) est telle que lorsque la portion de chargement/application (4a) de la partie de chargement/application (4) est déplacée à travers un essoreur (10), elle est comprimée radialement élastiquement.
